# EUROPEAN PATENT APPLICATION

(11) **EP 2 153 715 A2**
(43) Date of publication of application: **17.02.2010**
(21) Application number: 07788608.3
(22) Date of filing: 15.06.2007
(51) Int. Cl.: A01K 1/02

(54) **CRUSH-PREVENTION DEVICE FOR SUCKING PIGS**

(30) Priority: 16.06.2006 ES 200601431 U
(71) Applicant: Montalban Vicenzi, Samuel, 08600 Bergia Barcelona (ES); Esteve Bonmati, Pere, 08600 Bergia Barcelona (ES); Marcos Marsa, Alfonso, 08600 Begia Barcelona (ES)
(72) Inventor: ESTEVE BONMATI, Pere, 08600-Berga Barcelona (ES); MARCOS MARSA, Alfonso, 08600-Berga Barcelona (ES)
(74) Representative: Pereira Toña, Maria Irache
(86) International application number: PCT/ES2007/000360
(87) International publication number: WO 2007/147919

(57) **Abstract**

This device is applicable in cages provided with an enclosure for the temporary housing of a sow and sucking pigs and at least one access port (2). The device comprises: at least one support element (3) associated with an actuation motor (4) controlled by a sensor (5), closure gates (7) suspended from the aforementioned support element by means of hinges which enable same to be lowered under the weight thereof into a vertical closed position and to be lowered freely outside of the cage, and limit stop means (6) which prevent the closure gates (7) from being lowered into the cage.

## Description

### Object of the invention

This invention refers to a crush-prevention device for sucking pigs, adaptable to any birthing cage and specially designed to reduce the risk of death of sucking pigs due to crush.

### Background of the invention.

The rate of mortality of sucking pigs due to crushing is very high during their breeding process, and the said crushing occurs when a sow lies down on a sucking pig.

In order to avoid the possibility of crushing of sucking pigs by their mother, different devices have been invented up to date with limited efficacy for the intended purpose.

For instance, the Spanish invention patent P544716, with publication number ES8702114, describes some improvements of a device for prevention of death of sucking pigs by oppression in pig breeding premises; these improvements consist in a device equipped with at least one microphone connected to the pigpen housing a sow and sucking pigs, a noise detector connected to the microphone and generating an electrical impulse depending on the stored sound signal that serves as a comparative signal, and an alarm device that may be activated by the impulse generated by the noise detector.

This invention patent foresees that the alarm device can be constituted by an electrically conducting sphere situated in the area where the sow lies down and transmitting an electric discharge to the sow when the noise detector delivers the electrical impulse.

It is also foreseen that the said alarm device can be constituted by a electrically conducting belt worn by the sow, that generates an electric discharge when the noise detector delivers the electrical impulse.

The solution proposed in this invention patent, apart from being dangerous for the sow due to electric discharges to which it is subject, does not reduce the risk of crush of sucking pigs that occurs when the sow lies down on sucking pigs.

### Description of the invention

The crush-prevention device being the object of this invention is adaptable to any birthing cage and its characteristics are aimed at preventing the sucking pigs from entering the birthing cage and situating themselves under the sow when she is in upright position, thus avoiding crushing of sucking pigs in the moment when the sow lies down.

The crush-prevention device for sucking pigs is adaptable to any conventional birthing cage that comprises an enclosure for temporary housing of a sow and sucking pigs and at least one access port.

According to the invention, this device comprises ar least one support element associated with an actuation motor controlled by a sensor that depending on whether the sow is in an upright or lying position, causes lineal displacement of the support element towards an operative position or an inoperative position, and the cage is additionally equipped with selective closure gates suspended from the aforementioned support element by means of hinges or articulated lowering means, that enable the gates to be lowered under the weight thereof into a vertical closed position and to be lowered freely outside of the cage thus permanently making possible the exit of the sucking pigs.

This device comprises limit stop means which prevent the closure gates from being lowered into the cage and consequently prevent the entry of sucking pigs when the movable support element is in operative position and the gates are in closed position.

In the operative position of the support element the gates are situated in front of the access port or ports of the cage, while in the inoperative position of the support element the gates are situated in an offset position with respect to the access ports that are permanently open.

The sensor responsible of activating the motor or actuator to cause the movement of the support bearing the gates to operative position or to inoperative position shall be preferably constituted by a photoelectric cell attached to the cage and situated at the adequate height in order to detect the sow only when she is in upright position, though this does not exclude the use of any other type of sensor capable of detecting the upright or lying position of the sow.

The device comprising the elements described above has a very simple functioning and dramatically reduces the rate of mortality of sucking pigs due to crushing.

When the sow gets up, she is detected by the sensor and the said sensor causes the activation of the motor or actuator in the adequate direction to cause the displacement of the support element or elements towards operative position, in which the gates are situated in front of the access port or ports of the cage. In this position sucking pigs can leave the cage pushing the gates outside, but they cannot enter the cage as the limit stop means prevent the gates from lowering. This guarantees that when the sow lies down again, the sucking pigs are retained outside the cage, thus avoiding the risk of crushing.

When the sow lies down, she is no longer detected by the photoelectric cell and the said cell causes the activation of the motor or actuator in the adequate direction to cause the displacement of the support element or elements towards inoperative position, in which the gates are situated in offset position with respect to the access port of the cage, in this way the access to the cage is free, which allows the entry of sucking pigs to suckle, which is only possible after the sow has laid down.

### Description of the figures.

To complement the description that has been made and in order to facilitate the comprehension of the characteristics of the invention, a set of drawings is attached to this descriptive memory, which, being of illustrative and not limiting nature, show the following:
- Figure 1 shows a schematic elevation view of crush-prevention device installed in a conventional cage; it also shows the support element in operative position and the hinged gates in closed position. The position shown is the one adopted by the device when the sow is in upright position.
- Figure 2 shows an elevation view of the device with the support element in inoperative position and the gates in offset position with respect to cage access ports. This position is maintained when the sow is in lying position and is not detected by the photoelectric cell.
- Figure 3 corresponds to a lateral view of the cage sectioned by a vertical plane and in the same position show on figure 1, the closed position of the gates is shown in solid line and the lowered outside position is shown in dash line.

### Preferred embodiment of the invention

The example of embodiment shown on the figures shows the device being the object of this invention applied over a standard cage including a rectangular prism enclosure delimited by bars (1) and in this case equipped with two access ports (2) for entry and exit of sucking pigs.

On each of the lateral sides of the cage equipped with access ports (2), the device comprises a support element (3) installed with possibility of lateral displacement on guides (31). Closure gates (7) that can be lowered outside of the cage and that tend to be maintained in a vertical closed position under the weight thereof are suspended from each support element (3).

Each support element (3) is connected by a cable (32) to a winding drum (41) activated by a motor or actuator (4). The activation of the motor (4) is controlled by a photoelectric cell (5) attached to the cage and situated at the adequate height in order to detect the sow only when she is in upright position. The sensor (5) represented on the figures by a photoelectric cell can be of contact, movement, proximity or of any other type.

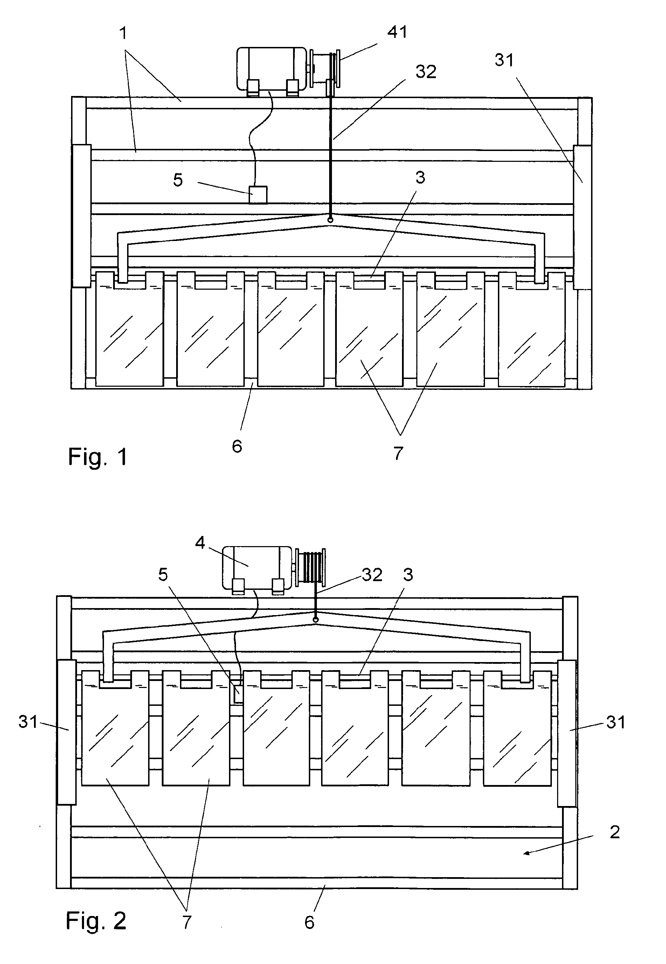

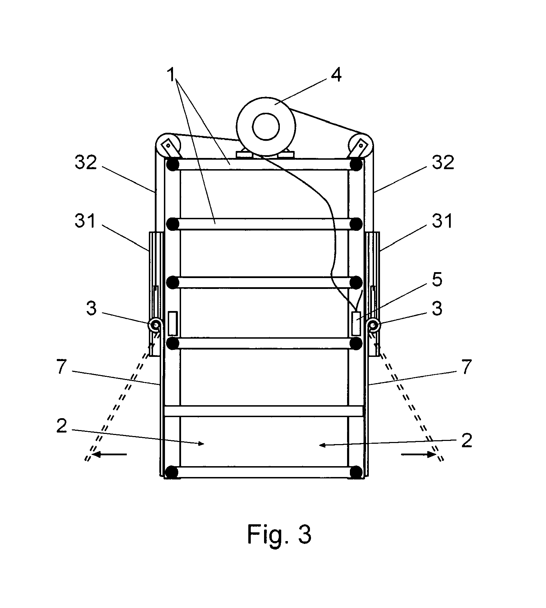

When the sow gets up and is detected by photoelectric cell (5), the said cell causes activation of the motor (4) in adequate direction of rotation to cause unwinding of the cable (32), lowering of support element (3) and consequently positioning of the gates (7) in front of the access port (2) of the cage. In this position, shown on figures 1 and 3, sucking pigs can leave the cage pushing any of the gates (4) as shown on figure 3.

Once they are outside the cage, sucking pigs cannot enter the cage while the sow is in upright position, because the lower limit stop (6) prevents the gates (4) from lowering inside the cage.

When the sow lies down inside the cage, it is no longer detected by photoelectric cell (5) and this cell (5) causes the activation of the motor (4) in the adequate direction to cause the elevation of the support elements (3) to a position shown on figure 2, in which the gates (4) are in an offset position with respect to the access ports (2) which allows sucking pigs to access the cage freely to suckle.

When the sow gets up and is once again detected by photoelectric cell (5), the said cell will cause the lowering of the gates thus repeating the operations described above.

Having sufficiently described the nature of the invention and also an example of its preferred embodiment, it is herewith stated, for whatever purposes might be appropriate, that the materials, form, size and layout of the described elements can be modified, on condition that it will not lead to an alteration of the essential characteristics of the invention claimed below.

## Claims

1. Crush-prevention device for sucking pigs; adaptable to any cage for breeding of sucking pigs provided with an enclosure for the temporary housing of a sow and sucking pigs and at least one access port (2); **characterized by** the fact that it comprises: at least one support element (3) associated with an actuation motor (4) controlled by a sensor (5) which, depending on whether the sow is in upright or lying position, causes lineal displacement of the support element (3) into operative position or inoperative position, closure gates (7) suspended from the aforementioned support element (3) by means of hinges which enable same to be lowered under the weight thereof into a vertical closed position and to be lowered freely outside the cage, thus making permanently possible the exit of sucking pigs, and limit stop means (6) which prevent the closure gates from being lowered into the cage.

2. Device according to claim 1, **characterized by** the fact that in operative position of the support element (3), the gates (7) are situated in front of the access ports (2) of the cage and by the fact that in inoperative position of the support element (3) the gates (7) are situated in offset position with regard to the access ports (2).

3. Device according to claim 1, **characterized by** the fact that the sensor (5) is constituted by a photoelectric cell attached to the cage and situated at the adequate height in order to detect the sow only when she is in upright position.

4. Device according to claim 1, **characterized by** the fact that the closure gates (7) are suspended from the support element (3) by means of an articulated displacement device.
